# EUROPEAN PATENT SPECIFICATION

(11) **EP 0 877 204 B1**
(45) Date of publication and mention of the grant of the patent: **29.01.2003**
(21) Application number: 98201478.9
(22) Date of filing: 06.05.1998
(51) Int. Cl.: F23N 5/24, F16K 17/36

(54) **Safety device, especially for gas apparatus**
Sicherheitsvorrichtung, insbesondere für Gasgeräte
Dispositif de sécurité, notamment des appareils à gaz

(30) Priority: 06.05.1997 ES 9700969
(43) Date of publication of application: 11.11.1998
(73) Proprietor: BSH Fabricacion, S.A., 31191 Esquiroz (Navarra) (ES)
(72) Inventor: Gonzalez Molina, Juan, 31620 Huarte-Pamplona (Navarra) (ES)
(74) Representative: Richter, Harald, Dr.

(56) References cited:
- US-A- 2 185 098
- PATENT ABSTRACTS OF JAPAN vol. 014, no. 424 (M-1024), 12 September 1990 & JP 02 166309 A (MATSUSHITA ELECTRIC IND CO LTD), 27 June 1990

## Description

The present invention refers to a safety valve according to the preamble of claim 1.

From the document US-2185098 A, a safety valve is know which forms the basis of the preamble of claim 1. The safety valve comprises a valve member which provides greater turning moment for this member when the safety valve is tilted without increasing the diameter of the safety valve.

Gas apparatus for household use, but also camping gas apparatus, which are generally transportable, normally have a space for a gas cylinder and a gas tank as well as for the burner that must be fed with gas. The gas in the cylinders or in the tanks must be gaseous or it may be present as a liquid gas according to the type of gas.

Hence, gas stoves to be also used in homes, in summer dwellings, etc., in whose bottom part there are travelling wheels, have a space for the gas cylinder in the rear part, as well as some burners, that are placed in the front part of the gas stove.

These apparatus may tip over for any reason while they are being used, in other words, while the heating operation is taking place, whereby there is a danger of fire, especially when the apparatus falls forwards, namely when the burners placed in the front part of the apparatus, especially the flames that comes out of these burners, come in contact with the floor. In general a pre-determined installation position for this type of apparatus, wherein there apparatus must be functional is foreseen. An essential modification of this installation position can and must be considered atypical and as a situation that includes a potential danger. In order to reduce this potential danger safety measures, especially in the form of safety valve as known measures are used in this type of apparatus and in apparatus with a similar potential danger.

Thus, for example, WO 96/25631 A describes a valve that is inserted in a gas duct of the system and that has an inside widening with a ball, in such a way that when the apparatus tilts, the ball prevents the gas supply, is known. This system has the inconvenience that the tilting of the gas apparatus, especially of a stove, must be done in the direction of the safety valve, so that the valve has effect, or there must be different safety valves that are series connected and that must be aligned in different directions, which increases to a great degree the costs of the gas apparatus. Safety apparatus, that are equipped with switches that have mercury balls, are also known and in this case there is the inconvenience that a very toxic element is used, aside from posing other electric problems in the safety valve.

The object of the invention is to provide a safety valve that can be used in a simple manner and that is very efficient.

The object of the invention is achieved by the safety valve according to claim 1. Preferred embodiments of the subject matter of claim 1 are claimed in the dependent claims.

According to the invention, the sealing element of the safety valve is formed by a cup and is placed in the center chamber with a curvature aligned in the direction of the narrowed through hole, assured by the geometry of the height of the chamber.

The safety valve according to the invention may be part of the gas duct that goes from the reserve gas tank or gas burner of the gas apparatus or in accordance with a preferred shape, it is an individual part that is inserted between the reserve gas tank and the gas burner in a discretional place in the gas passage.

Preferably, the safety valve according to the invention is characterized in that the height of the cup is less than the radius of the base circle.

The center chamber has an area that serves as a housing for a cap or semipherical-shaped body; the curvature of the semisphere, the base surface of this semisphere and the cylindrical chamber have the same or approximately the same radius, where the radius of the base surface of the semisphere cannot be in any case smaller than the radius of the cylindrical chamber.

Besides, the center chamber is in communication with the inlet nozzle by means of a channel and with the outlet nozzle by means of another channel and it is provided with a sealing joint that has an inside lip.

The axial direction or main direction of the chamber is a right angle with respect to the axial direction of the inlet and outlet nozzles.

When the apparatus is in the vertical use position, the valve is in a horizontal arrangement, which facilitates the flow of gas towards the burners, while when the apparatus falls in any other direction, the semispherical body also tilts and closes the passage by means of the contact of the spherical surface with the cited lip, which interrupts the gas supply.

In the following, the invention is described by means of the accompanying figures.

Figure 1 shows a longitudinal cross section of the safety valve according to the invention.

Figure 2 shows longitudinal section of an embodiment of the safety valve according to the invention.

The safety valve for gas apparatus, that is represented in this embodiment, consists of a part (1) that is inserted between the gas tank of the corresponding apparatus and the burners of the same. Part (1) is shaped for insertion in a gas duct, that extends horizontally in this area.

Part (1) has an inlet nozzle (2) and an outlet nozzle (3), that are in communication by means of a center chamber (4). In this embodiment, the chamber (4) is cylindrical and has a channel (5) of communication with the inlet nozzle (2), as well as a passage (6) of communication with the outlet nozzle (3).

This passage (6) has, for example, a larger diameter than the channel (5) and has a sealing joint (7) with an inside lip (8).

The inside of the chamber (4) houses a cup in the form of a solid semispherical cap (9), whose angular width is slightly less than that of the corresponding semispherical arrangement. The edge of the cap (9) serves as a swivel joint and is bevel-edged or rounded in order not to wedge in the chamber and in order not to damage the walls thereof.

This cap (9) facilitates the closing of the passage (6) in the event that the apparatus, in which this valve is installed, tips over, given that the curved surface comes in contact with the lip (8) and specifically theoretically by virtue of the same radius of the chamber (4) and the spherical origin of the cap, although in practice the radius of the cap (9) is slightly smaller, so that there is play and that the lowering of the cap is not impeded.

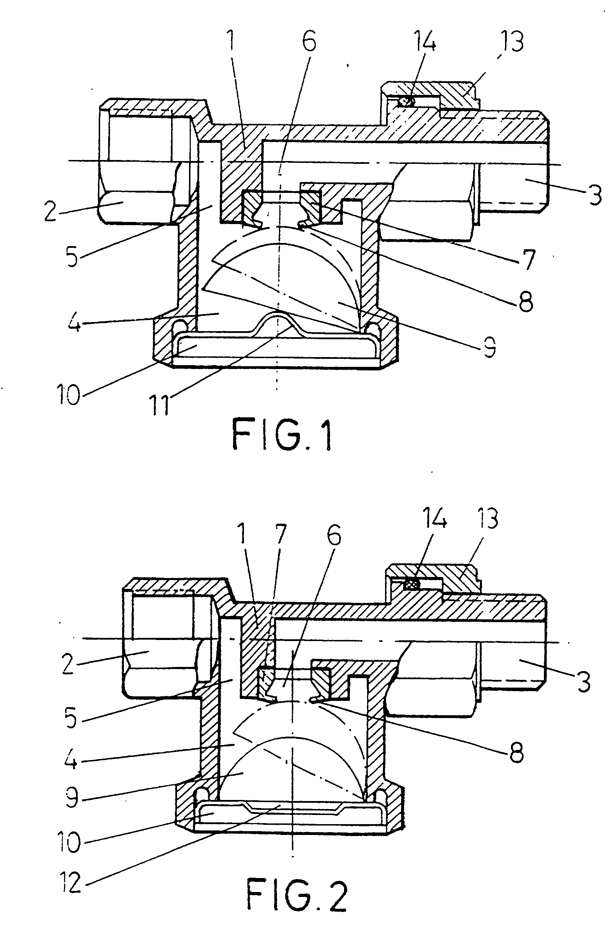

For the same reason there is a closing cover (10), that closes the chamber (4), a center pivot (11), that establishes a separation between this closure and the cap, although the valve can also be made with a center cavity (12) in which the dosing cover (10) as shown in figure 1, or the closing over (10) can also be totally smooth.

In figure 1, which represents a preferred embodiment, and also in figure 2 the lowering of the cap by means of a dot-dash line is represented.

In order to fix part (1) in a correct position with the corresponding gas duct, a safety nut (13) and a sealing part (14), that are arranged in an outside thread of the outlet nut (3), are provided for.

The valve according to this embodiment considerably improves known valves, given that the closing of the gas duct is done irrespective of the direction in which the apparatus, in which the valve, for example, a stove, is placed, falls. This means that the valve is useful in the same way in a hypothetical gas cylinder apparatus, although in general these apparatus that include this type of valve, are prismatic-rectangular and, therefore, there are preferably only four directions in which to fall.

Unlike the represented embodiment, in the case of a vertical inlet and outlet of the gases in the area of part (1), the part should be provided with connecting tubes, that are aligned to or are parallel with the represented axis of the part and for example empties directly into the side of the bottom of the part (1) for the inlet of gas and in the top passage (6) of the part. In this way the functionality of the valve of the part (1) is not hampered. The connecting tubes can also be shaped in such a way that there is an angular valve.

## Claims

1. Safety valve to be inserted in a fluid duct, said safety valve being operative to close the fluid duct by a displacement from a horizontal position of the safety valve towards a vertical position of the safety valve, which acts in terms of the position, for use in a fluid duct, the valve comprising
a central chamber (4) with a fluid inlet (2, 5) and a fluid outlet (3, 6), said outlet (3, 6) comprises a passage (6) that ends in an area of the chamber (4) which presents the top base of the chamber in said horizontal position of the safety valve; and
a closing element (9) housed loosely in the chamber (4) and being shaped like a spherical cap, said closing element (9) being placed in its inoperative position on a base of the chamber (4) which presents the bottom base of the chamber in said horizontal position of the safety valve, said closing element (9) carries out, during said displacement, a change from its inoperative position towards a closing position in which the passage (6) of the fluid outlet (3, 6) is obstructed by the spherical top surface of the closing element; wherein
the chamber (4) has a size that allows the change of position of the cap (9) and that assures that, when said displacement is reversed, the cap returns to its inoperative position; **characterised in that**
the inlet (2) comprises a channel (5) that ends in the chamber (4) in a place other than the bottom base of said chamber (4).

2. Safety valve according to claim 1, **characterized in that** the mass of the cap (9) and the section of the passage (6) are sized in such a way that the cap (9) is displaced in the chamber (4) towards the passage (6) when the effects of gravity acting on the cap in said displacement are greater than the gripping force exerted on the cap (9) by a differential pressure produced in the closing position.

3. Safety valve according to claim 1, **characterized in that** the passage (6) ends in an O-ring seal (7) in the area of the top base of the chamber (4) and **in that** in its closing position, the top surface of the cap (9) contacts with said O-ring seal (7).

4. Safety valve according to claim 3, **characterized in that** the O-ring seal (7) in the area of the top base of the chamber (4) has an internal bottom perimetric lip that contacts the top surface of the cap (9).

5. Safety valve according to claim 1, **characterized in that** the channel (5) ends in the top base of the chamber (4).

6. Safety valve according to any of the claims 1 to 4, **characterized in that** the cap (9) has a height less than the extension of the radius of the circle defined by its base and **in that** said height is less than the height of the chamber (4) in the area in which the passage (5) ends.

7. Safety valve according to any of the claims 1 to 6, **characterized in that** the chamber (4) that houses the cap (9) is cylindrical.

8. Safety valve according to any of the claims 1 to 7, **characterized in that** the bottom base of the chamber (4) centrally has a pivot (11) upon which the base of the cap (9) rests.

9. Safety valve according to any of the claims 1 to 8, **characterized in that** the bottom base of the chamber (4) is formed by a cap (10).

10. Safety valve according to claim 1, **characterized in that** the chamber (4) is arranged perpendicularly to the direction of flow of the gas.

## Patentansprüche

1. Sicherheitsventil zum Einsetzen in eine Fluidleitung, wobei dieses Sicherheitsventil betrieben wird, um die Fluidleitung zu sperren, wenn das Sicherheitsventil aus einer horizontalen Stellung in eine vertikale Stellung bewegt wird, das stellungsabhängig wirkt, zum Gebrauch in einer Fluidleitung, wobei das Ventil umfaßt:
eine zentrale Kammer (4) mit einem Fluideinlaß (2, 5) und einem Fluidauslaß (3, 6), wobei dieser Auslaß (3, 6) einen Durchlaß (6) umfaßt, der in einem Bereich der Kammer (4) endet, der in der horizontalen Stellung des Sicherheitsventils die obere Fläche der Kammer bildet; und
ein Verschlußelement (9), das lose in der Kammer (4) untergebracht ist und wie eine sphärische Kappe geformt ist, wobei dieses Verschlußelement (9) in seiner Ruhestellung auf einer Fläche der Kammer (4) angeordnet ist, die in der horizontalen Stellung des Sicherheitsventils den Boden der Kammer bildet, und dieses Verschlußelement (9) bei dieser Bewegung aus seiner Ruhestellung in eine Verschlußstellung wechselt, in welcher der Durchlaß (6) des Fluidauslasses (3, 6) durch die sphärische obere Fläche des Verschlußelements gesperrt wird; wobei
die Kammer (4) eine Größe aufweist, die den Stellungswechsel der Kappe (9) erlaubt und gewährleistet, daß die Kappe in ihre Ruhestellung zurückkehrt, wenn die Bewegung umgekehrt wird;
**dadurch gekennzeichnet, daß**
der Einlaß (2) einen Kanal (5) umfaßt, der an einer anderen Stelle als am Boden dieser Kammer (4) in der Kammer (4) endet.

2. Sicherheitsventil nach Anspruch 1, **dadurch gekennzeichnet, daß** die Masse der Kappe (9) und der Querschnitt des Durchlasses (6) so bemessen sind, daß die Kappe (9) in der Kammer (4) zum Durchlaß (6) hin bewegt wird, wenn die Wirkung der Schwerkraft, die bei dieser Bewegung auf die Kappe wirkt, größer ist als die auf die Kappe (9) ausgeübte Greifkraft, die durch den Differentialdruck in der Verschlußstellung erzeugt wird.

3. Sicherheitsventil nach Anspruch 1, **dadurch gekennzeichnet, daß** der Durchlaß (6) in einem Runddichtring (7) im Bereich der oberen Fläche der Kammer (4) endet, und daß die obere Fläche der Kappe (9) in ihrer Verschlußstellung mit diesem Runddichtring (7) in Kontakt ist.

4. Sicherheitsventil nach Anspruch 3, **dadurch gekennzeichnet, daß** der Runddichtring (7) im Bereich der oberen Fläche der Kammer (4) eine innenliegende untere Umfangslippe aufweist, die mit der oberen Fläche der Kappe (9) in Kontakt ist.

5. Sicherheitsventil nach Anspruch 1, **dadurch gekennzeichnet, daß** der Kanal (5) in der oberen Fläche der Kammer (4) endet.

6. Sicherheitsventil nach einem der Ansprüche 1 bis 4, **dadurch gekennzeichnet, daß** die Kappe (9) eine Höhe aufweist, die kleiner ist als der Radius des Kreises, der von ihrer Grundfläche gebildet wird, und daß diese Höhe kleiner ist als die Höhe der Kammer (4) in dem Bereich, in dem der Durchlaß (5) endet.

7. Sicherheitsventil nach einem der Ansprüche 1 bis 6, **dadurch gekennzeichnet, daß** die Kammer (4), in der die Kappe (9) untergebracht ist, zylindrisch ist.

8. Sicherheitsventil nach einem der Ansprüche 1 bis 7, **dadurch gekennzeichnet, daß** der Boden der Kammer (4) einen Drehpunkt (11) aufweist, auf welchem der Boden der Kappe (9) ruht.

9. Sicherheitsventil nach einem der Ansprüche 1 bis 8, **dadurch gekennzeichnet, daß** der Boden der Kammer (4) durch eine Kappe (10) gebildet wird.

10. Sicherheitsventil nach Anspruch 1, **dadurch gekennzeichnet, daß** die Kammer (4) rechtwinklig zur Strömungsrichtung des Gases angeordnet ist.

## Revendications

1. Soupape de sûreté à introduire dans un tuyau de fluide, ladite soupape de sûreté étant active pour fermer le tuyau de fluide par un déplacement d'une position horizontale de la soupape de sûreté vers une position verticale de la soupape de sûreté, qui agit en fonction de la position, pour une utilisation dans un tuyau de fluide, la soupape comprenant
une chambre centrale (4) avec une entrée de fluide (2, 5) et une sortie de fluide (3, 6), ladite sortie (3, 6) comprend un passage (6) qui aboutit dans une zone de la chambre (4) présentant la base supérieure de la chambre dans ladite position horizontale de la soupape de sûreté ; et
un élément de fermeture (9) logé librement dans la chambre (4) et étant formé comme un chapeau sphérique, ledit élément de fermeture (9) étant placé dans sa position de repos sur une base de la chambre (4) qui présente la base inférieure de la chambre dans ladite position horizontale de la soupape de sûreté, ledit élément de fermeture (9) exécute, pendant ledit déplacement, un changement de sa position de repos vers une position de fermeture dans laquelle le passage (6) de la sortie de fluide (3, 6) est obstrué par la surface supérieure sphérique de l'élément de fermeture ; dans laquelle
la chambre (4) a une taille qui permet le changement de position du chapeau (9) et qui assure, lorsque ledit déplacement est inversé, le retour du chapeau dans sa position de repos ; **caractérisée en ce que**
l'entrée (2) comprend un canal (5) qui aboutit dans la chambre (4) à un emplacement autre que la base inférieure de ladite chambre (4).

2. Soupape de sûreté selon la revendication 1, **caractérisée en ce que** la masse du chapeau (9) et la section du passage (6) sont dimensionnées de telle manière que le chapeau (9) est déplacé dans la chambre (4) vers le passage (6) lorsque les effets de la gravité agissant sur le chapeau dans ledit déplacement sont supérieurs à la force d'adhérence exercée sur le chapeau (9) par une pression différentielle produite dans la position fermée.

3. Soupape de sûreté selon la revendication 1, **caractérisée en ce que** le passage (6) se termine dans un joint torique (7) dans la zone de la base supérieure de la chambre (4) et **en ce que** dans sa position fermée, la surface supérieure du chapeau (9) est en contact avec ledit joint torique (7).

4. Soupape de sûreté selon la revendication 3, **caractérisée en ce que** le joint torique (7) dans la zone de la base supérieure de la chambre (4) a une lèvre interne inférieure périphérique qui est en contact avec la surface supérieure du chapeau (9).

5. Soupape de sûreté selon la revendication 1, **caractérisée en ce que** le canal (5) se termine dans la base supérieure de la chambre (4).

6. Soupape de sûreté selon l'une quelconque des revendications 1 à 4, **caractérisée en ce que** le chapeau (9) a une hauteur inférieure à l'extension du rayon du cercle défini par sa base et **en ce que** ladite hauteur est inférieure à la hauteur de la chambre (4) dans la zone dans laquelle le passage (5) aboutit.

7. Soupape de sûreté selon l'une quelconque des revendications 1 à 6, **caractérisée en ce que** la chambre (4) qui loge le chapeau (9) est cylindrique.

8. Soupape de sûreté selon l'une quelconque des revendications 1 à 7, **caractérisée en ce que** la base inférieure de la chambre (4) comprend au centre un pivot (11) sur lequel est en appui la base du chapeau (9).

9. Soupape de sûreté selon l'une quelconque des revendications 1 à 8, **caractérisée en ce que** la base inférieure de la chambre (4) est formée par un couvercle (10).

10. Soupape de sûreté selon la revendication 1, **caractérisée en ce que** la chambre (4) est placée perpendiculairement au sens d'écoulement du gaz.
